Europäisches Patentamt

European Patent Office

Office européen des brevets

(11) Publication number: 0 404 578
A1

## EUROPEAN PATENT APPLICATION

(21) Application number: 90306812.0

(22) Date of filing: 21.06.90

(51) Int. Cl.⁵: H01M 10/40, H01M 4/58,
H01M 4/62

(30) Priority: 21.06.89 JP 160415/89

(43) Date of publication of application:
27.12.90 Bulletin 90/52

(84) Designated Contracting States:
DE FR GB

(71) Applicant: SHARP KABUSHIKI KAISHA
22-22 Nagaike-cho Abeno-ku
Osaka 545(JP)

(72) Inventor: Tanaka, Hideaki
116-5-507, 2-chome, Gakuendaiwa-cho
Nara-shi, Nara-ken(JP)
Inventor: Mitate, Takehito
Akebono-dormitory, 2613-1, Ichinomoto-cho
Tenri-shi, Nara-ken(JP)
Inventor: Yanagisawa, Nobuhiro
696-1-401, Mitsugarasu-cho
Nara-shi, Nara-ken(JP)

(74) Representative: Brown, Kenneth Richard et al
R.G.C. Jenkins & Co. 26 Caxton Street
London SW1H 0RJ(GB)

(54) Secondary battery.

(57) A secondary battery comprising an positive electrode layer, a separator layer containing a nonaqueous electrolyte and a negative electrode layer laminated sequentially and sealed in a container, the negative electrode layer being made of a composite of a carbonaceous material and a polymeric solid electrolyte.

F I G. 1

EP 0 404 578 A1

## BACKGROUND OF THE INVENTION

### 1. Field of the Invention

The present invention concerns a secondary battery. More in particular, it relates to an improvement of a negative electrode in a secondary battery using as a nonaqueous electrolyte.

### 2. Description of the Related Art

Along with the size and weight reduction of electronic equipments, etc. in recent years, studies have been vigorously made for secondary batteries of high energy density utilizing an alkali metal such as lithium. Such secondary batteries are constituted by sequentially laminating a positive electrode layer, a separator layer containing a nonaqueous electrolyte and a negative layer and sealing them in a container. The negative electrode layer is formed by using (1) an alkali metal such as lithium or potassium and (2) an alkali metal alloy such as a lithium-aluminum alloy and (3) a low-melting-point alloy such as Wood's alloy.

Among conventional secondary batteries, a secondary battery using lithium metal as a negative electrode active material causes reduction in a charge/discharge cycle life due to the deposition of lithium dendrites during charging. In a secondary battery using an alloy of an alkali metal and aluminum or magnesium instead of lithium, the deposition of dendrites are suppressed in some extent, but any substantial improvement can not be attained since the electrode per se is collapsed with the deposition if the utilization factor of the alkali metal is increased. Further, a secondary battery using Wood's alloy has a drawback that the diffusing rate of lithium in the Wood's alloy is low, and accordingly, no great current density can be attained.

In addition, there has been proposed recently to make the negative electrode active substance of a secondary battery with materials, for example, conductive polymers such as polythiophene or poly-p-phenylene, material mainly comprising carbonaceous material prepared by carbonizing same types of organic materials or chemical vapor deposition of hydrocarbons.

Among them, secondary batteries using the carbonaceous material as the negative electrode active material (USP Nos. 4835075, 4863814 and 4863818, Japanese Patent Laid-Open Sho 63-102167, 124363 and 24555) are free from the problems involved in the secondary battery using metal lithium as the negative electrode active material, such as worsening of the charge/discharge cycle characteristics due to the passivation at the surface of the electrode, occurrence of internal short-circuiting due to the dendritic growth during charging. Moreover, the carbonaceous negative electrode is capable of charging/discharging around a much higher potential (vs. Li/Li$^+$), so a secondary battery using the carbonaceous electrode withstands overdischarge.

However, they have poor reaction stability at the boundary of the electrode, remarkable reduction of the capacity with lapse of time storage and lack in reliability on self-discharging characteristic.

Japanese Patent Laid-Open Sho 62-73559 discloses a negative electrode material comprising a conductive polymeric material and an ionic conductor consisting of an alkali metal salt or an ether type compound. Japanese Patent Laid-Open Sho 59-14264 discloses a negative electrode material comprising an ionic electroconductive polymeric material and, a lithium alloy and a carbon compound. However, none of them have satisfactory properties.

Further, Japanese Patent Laid-Open Sho 59-173977 discloses a secondary battery in which a thin film of polymeric electrolyte is disposed between a negative electrode and a separator. However, this can not thoroughly dissolve the foregoing problems regarding the negative electrode per se.

## SUMMARY OF THE INVENTION

The present invention has been made for overcoming such problems and it is an object thereof to provide a secondary battery with less aging reduction of the capacity even after long time storage and of excellent self-discharging characteristic.

Thus, according to the present invention, there is provided a secondary battery in which a positive electrode layer, a separator layer containing a nonaqueous electrolyte and a negative electrode layer are laminated sequentially and sealed in a container, and the negative electrode layer comprises a composite of a carbonaceous material and a polymeric solid electrolyte.

## BRIEF DESCRIPTION OF THE DRAWINGS

Fig. 1 is an explanatory view of a secondary battery manufactured in accordance with an example of the present invention;

Fig. 2 is an explanatory view for a carbonaceous material preparing apparatus in accordance with an example of the present invention; and

Fig. 3 is a graph showing the discharging characteristics of a secondary battery manufactured in accordance with an example of this invention.

## DETAILED DESCRIPTION OF THE PREFERRED EMBODIMENTS

In the present invention, the negative electrode layer comprises a composite of a carbonaceous material and a solid polymeric electrolyte. Any carbonaceous material such as graphite, etc., may be used so long as it is carbonaceous material capable of doping or de-doping an alkali metal ion, etc., and serving as an active substance by utilizing the intercalation reaction. The carbonaceous material can be prepared, for example, by chemical vapor deposition of a hydrocarbon compound under thermal decomposition, heat treatment of a condensated polymeric compound or carbon fibers or plasma chemical vapor deposition of a hydrocarbon compound.

The solid polymeric electrolyte used in the present invention means an organic polymer compatibly containing a compound electrolyte (supporting electrolyte) and being in non-liquid form. Specific examples of the organic polymer include poly-lower(i.e., $C_{1-5}$)-alkylene oxides such as polyethylene oxide, polypropylene oxide or copolymer or network polymer thereof; those containing at least one lower-alkylene oxide moiety in main or side chain such as poly[$\gamma$- methoxy-oligo-(ethylene oxide)-L-glutamate], oligo(ethylene oxide)polyphosphazene, poly[(alkoxy)phosphazene], polymethoxy ethylene glycol methacrylates, poly-(glycidyl methyl ether), poly(glycidyl-ethoxy-ethyl ether), poly(glycidylmethoxy-ethoxy-ethoxy-ethyl ether), a polymer of oxyethylene (meth-)acrylate or a copolymer of dimethylsiloxane and polyethylene oxide; polyorganophosphates such as poly-lower-alkyl-phosphate; and polyorganosiloxane (silicone) such as poly-lower-alkyl silicates. Two or more organic polymers may be used in combination. The compound electrolyte contained in such polymers may be an oxyacid salt of alkali metal such as sodium, potassium, lithium or the like. Suitable examples of the compound electrolytes include lithium perchlorate, lithium borofluoride, lithium hexafluoroarsenate, lithium hexafluorophosphate and lithium trifluoromethanesulfonate.

The solid polymeric electrolyte, for example, of poly-lower-alkylene oxide may be prepared by mixing the alkylene oxide with the compound electrolyte as aforementioned, under the melting temperature of the alkylene oxide or by the use of an easily removable solvent compatible with them, to obtain a homogeneous mixture of them. The solid polymeric electrolyte of polyorganophosphate may be prepared by mixing a lower alkyl phosphate such as trimethyl phosphate or triethyl phosphate with the compound electrolyte followed by heat-treating at a high temperature of from approx. 300 to 500 °C to condense the phosphate to a polyorgano phosphate. The compound electrolyte may suitably be contained in an amount of 0.1 - 2.0 mol/l(polymer).

The method of manufacturing the composite from the polymeric electrolyte and the carbonaceous material can include, for example,
(i) a method of mixing the carbonaceous material and the solid polymeric electrolyte each in an appropriate amount and the mechanically kneading them into a composite, (ii) a method of coating and impregnating the carbonaceous material with the solid polymeric electrolyte as it is or after dissolving it in an etheric solvent, etc. and (iii) a method of immersing the carbonaceous material into a liquid electrolyte solution in which the solid polymeric electrolyte is previously dispersed and chemically reacting the solid polymeric electrolyte to the boundary thereof.

These methods are not restrictive and the ratio of the solid polymeric electrolyte and the carbonaceous material is usually from 4/100 to 100/100 by weight.

In the present invention, the negative electrode layer is laminated over the positive electrode layer by mediation of a separator layer containing an nonaqueous electrolyte and the laminated product is sealed in a container to constitute a secondary battery. The positive electrode layer can be manufactured, for example, by using a heat-treating product of a chromium oxide such as $Cr_3O_6$, a metal oxide such as vanadium pentoxide or manganese oxide, a chalcogen compound such as titanium disulfide or titanium selenide or an electroconductive polymer such as polyaniline or polypyrrole.

The separator layer can be formed by impregnating an insulative material capable of containing a nonaqueous electrolyte with such electrolyte.

As the nonaqueous electrolyte, there can be used a solution prepared by dissolving a compound electrolyte (supporting electrolyte) containing, as cations, alkali metal ions such as of lithium perchlorate, lithium borofluoride, lithium hexafluoroarsenate, lithium hexafluorophosphate and lithium trifluoromethanesulfonate in an aprotic organic solvent, for example, propylene carbonate, ethylene carbonate, tetrahydrofuran, 2-methyltetrahydrofuran, $\gamma$-butyrolactone, dimethylsulfoxide, 1,2-dimethoxyethane or 1,3-dioxolan. As the insulative material, there can be used, for example, nonwoven polypropylene fabrics, porous polypropylene films and glass fibers.

## EXAMPLE

## Example 1

### Preparation of negative electrode

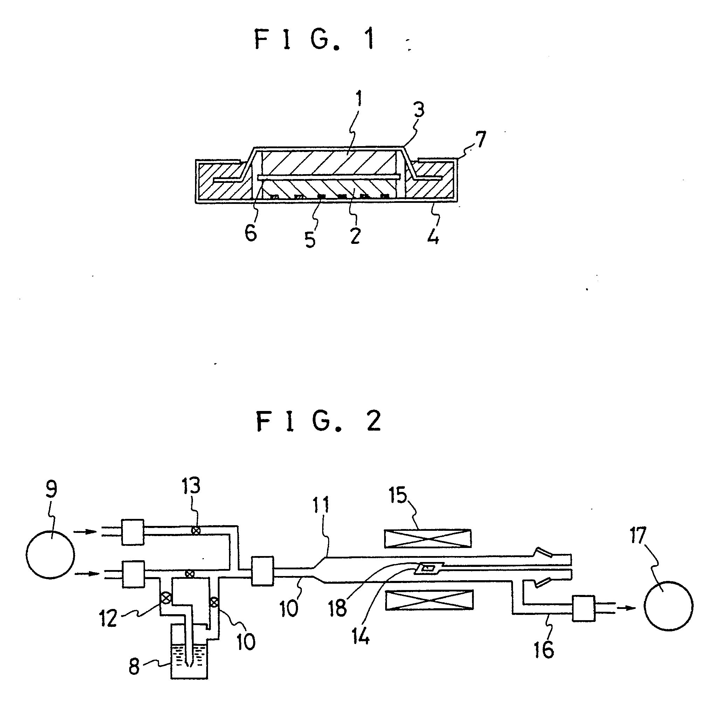

As shown in Fig. 2, benzene which has been subjected to dehydration and purification by distillation under vacuum is put in a vessel 8, to which an argon gas is supplied with a feeder 9 to bubble benzene, and evaporized benzene is transferred together with the argon gas by way of a pyrex glass tube 10 to a quartz tubular reactor 11. In this case, the temperature is maintained constant by heating the vessel 8 to compensate a lowered temperature due to evaporization of benzene, and needle valves 12, 13 are operated to optimize the amount of benzene. In the tubular reactor 11, foamed nickel as a metal substrate 18 (15 mm diameter, 1.0 mm thickness) is placed on a specimen holder 14, and a heating furnace 15 is disposed to the outer periphery of the tubular reactor 11. The specimen holder 14 and the metal substrate 18 are heated and maintained at about 1000°C by the heating furnace 15 to thermally decompose benzene supplied by way of the pyrex glass tube 10 thereby depositing 62.5 mg of carbonaceous material on the metal substrate 18. A gas remaining in the tubular reactor 11 after the heat decomposing reaction is evacuated by way of an evacuation tube 16 to an evacuation pump 17. A metal substrate deposited with the carbo naceous material thus prepared is compression molded to a diameter of 15 mm and a thickness of 0.5 mm to form carbonaceous material for the negative electrode.

Then, 7 g of $LiClO_4$ is dissolved in 40 ml of acetonitrile, to which 0.5 g of polyethylene oxide with a number average molecular weight of 5,000,000 is added and stirred sufficiently until a uniform phase is obtained to prepare a liquid polymeric electrolyte.

Then, the carbonaceous material for the negative electrode member is immersed into the liquid polymeric electrolyte, left under an argon atmosphere of a normal temperature and a normal pressure for 24 hours and then evacuated for three days to completely remove acetonitrile, thereby producing a negative electrode member in which the carbonaceous material is composited with the solid polymeric electrolyte. The negative electrode member is dried under reduced pressure. It shows 12.5 mAh of reversibly chargeable/dischargeable capacity by the examination in a propylene carbonate containing 1M lithium perchlorate in a globe box.

### Preparation of positive electrode

At first, chromium trioxide is applied with a heat-treatment at 230°C in an autoclave to obtain an oxide of a composition comprising $Cr_3O_8$. 10 parts by weight of acetylene black and 5 parts by weight of a powdery polytetrafluoroethylene resin are added to 100 parts by weight of the oxide and kneaded, 100 mg of the resulting mixture is compression molded at 210°C under a pressure of 300 $kg.cm^{-2}$ to obtain a positive electrode member. After drying the positive electrode member under reduced pressure, the capacity of the positive electrode member is examined in a propylene carbonate containing 1M lithium perchlorate in a dry box, the reversibly chargeable/dischargeable capacity being 19.7 mAh.

### Assembling for secondary battery

As shown in Fig. 1, the positive electrode member is press-bonded to a positive electrode vessel 4 previously spot-welded with a metal net 5 and disposed with a polypropylene packing 7. Then, a separator layer 6 made of non-woven polypropylene fabric containing 1M solution of lithium perchlorate in a propylene carbonate is disposed thereover. Then, the negative electrode member is spot-welded to a negative electrode can to form a negative electrode layer, which is disposed on the separator 6. The negative electrode can 3 is caulked by using a die and sealed with a polypropylene packing 7 to prepare a coin-type secondary battery A.

### Evaluation for the capacity retaining rate

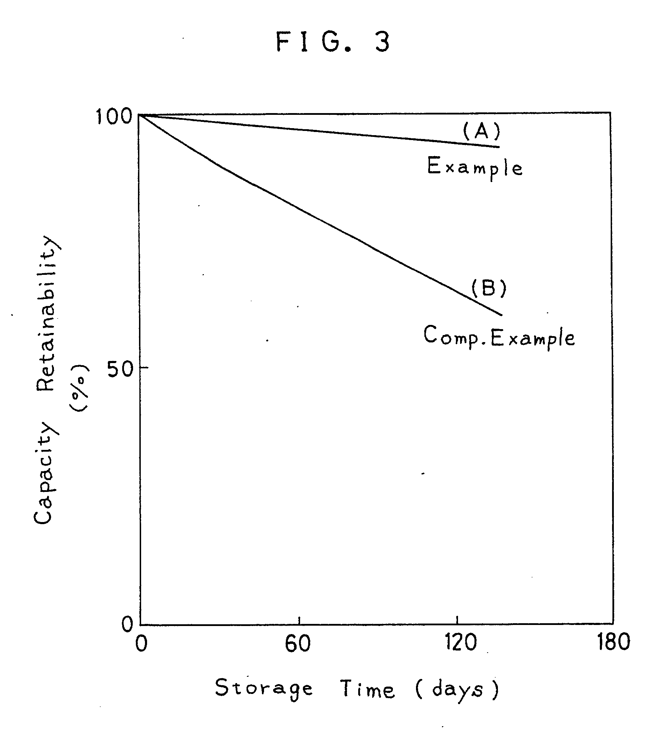

After repeating charge/discharge at 1 mA current, the secondary battery is stored in a charged state at 60°C and, when the change of the discharge capacity with lapse of time is measured, it has been confirmed that the battery is remarkably excellent for the capacity retainability, as shown in Fig. 3.

### Comparative Example 1

A coin-type secondary battery B is prepared in the same procedures as those in Example 1 except for using a negative electrode member prepared not composited with a solid polymeric electrolyte instead of using the negative electrode member formed by compositing the carbonaceous material deposited on foamed nickel with the solid polymeric electrolyte in Example 1. When the aging change for the discharge capacity is measured for the secondary battery B like that in Example 1, the capacity retainability is reduced with elapse of time as shown in Fig. 3.

According to this invention, there can be provided a secondary battery of less reduction of capacity with lapse of time even after long time storage and with satisfactory cycle characteristics and self-discharging characteristics. It is considered that such characteristics can be achieved, because the solid polymeric electrolyte composited with the carbonaceous material can stabilize the chemical reaction at the anode electrode.

The battery according to the present invention can be reduced for the weight and the size and used as a secondary battery as a high energy density.

## Claims

1. A secondary battery comprising a positive electrode layer, a separator layer containing a nonaqueous electrolyte and a negative electrode layer laminated sequentially and sealed in a container, the negative electrode layer comprising a composite of a carbonaceous material and a polymeric solid electrolyte.

2. The secondary battery of claim 1 in which the carbonaceous material is one prepared by vapor deposition of a hydrocarbon compound under thermal decomposition, heat treatment of a condensated polymeric compound or carbon fibers,or plasma chemical vapor deposition of a hydrocarbon compound.

3. The secondary battery of claim 1 in which the polymeric solid electrolyte comprises an organic polymer containing a compound electrolyte.

4. The secondary battery of claim 3 in which the organic polymer is a poly-lower alkylene oxide, a polymer containing at least one lower alkylene oxide moiety in main or side chain thereof, a polyorganophosphate or polyorganosiloxane.

5. The secondary battery of claim 3 in which the organic polymer is a poly-lower alkylene oxide.

6. The secondary battery of claim 3 in which the compound electrolyte is a salt of an alkali metal.

7. The secondary battery of claim 6 in which the salt is lithium perchlorate, lithium borofluoride, lithium hexafluoroarsenate, lithium hexafluorophosphate or lithium trifluoromethanesulfonate.

8. The secondary battery of claim 3 in which the compound electrolyte is contained in an amount of 0.1 - 2.0 mol/l (polymer).

9. The secondary battery of claim 1 in which the positive electrode is made from a chromium, vanadium or manganese oxide, or a chalcogen compound, or an electroconductive polymer.

10. The secondary battery of claim 1 in which the separator layer comprises an insulating material and a nonaqueous electrolyte impregnated in the material.

11. The secondary battery of claim 10 in which the nonaqueous electrolyte comprises an aprotic organic solvent and a compound electrolyte.

F I G. 1

F I G. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 205 856 (ASAHI KASEI KOGYO K.K.) * Abstract; column 8, line 45 – column 14, line 55; column 15, line 45 – column 16, line 43 * --- | 7-11 | H 01 M 10/40 H 01 M 4/58 H 01 M 4/62 |
| Y | JOURNAL OF POWER SOURCES, vol. 9, nos. 3/4, April-May 1983, pages 365-371, Elsevier Sequoia, Amsterdam, NL; R. YAZAMI et al.: "A reversible graphite-lithium negative electrode for electrochemical generators" * Pages 366,369-371 * --- | 1-11 | |
| D,X | EP-A-0 098 772 (SOCIETE NATIONALE ELF AQUITAINE) * Abstract; page 6, line 1 – page 7, line 32; page 9, lines 10-32; claims * & JP-A-59 14 264 --- | 1 | |
| D,A | PATENT ABSTRACTS OF JAPAN, vol. 11, no. 271 (E-356)[2718], 3rd September 1987; & JP-A-62 73 559 (SHOWA DENKO K.K.) 04-04-1987 * Whole abstract * --- | 1,4 | TECHNICAL FIELDS SEARCHED (Int. Cl.5) H 01 M 10/40 H 01 M 4/58 H 01 M 4/62 |
| A | PATENT ABSTRACTS OF JAPAN, vol. 12, no. 474 (E-692)[3321], 12th December 1988; & JP-A-63 193 463 (TOSHIBA BATTERY CO., LTD) 10-08-1988 * Whole abstract * --- | 1 | |
| A | PATENT ABSTRACTS OF JAPAN, vol. 13, no. 117 (E-731)[3465], 22nd March 1989; & JP-A-63 289 759 (HITACHI LTD) 28-11-1988 * Whole abstract * --- -/- | 1 | |

The present search report has been drawn up for all claims

| Place of search | Date of completion of the search | Examiner |
|---|---|---|
| THE HAGUE | 04-10-1990 | DE VOS L.A.R. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 239 410  (SHARP K.K.)<br>* Page 2, line 57 - page 5, line 26; page 7, example 4 * | 2-11 | |
| A | US-A-4 814 242  (MacRAE MAXFIELD)<br>* Whole document * | 1-11 | |

TECHNICAL FIELDS
SEARCHED (Int. Cl.5)

The present search report has been drawn up for all claims

| Place of search | Date of completion of the search | Examiner |
|---|---|---|
| THE HAGUE | 04-10-1990 | DE VOS L.A.R. |

EPO FORM 1503 03.82 (P0401)